(19) Europäisches Patentamt

European Patent Office

Office européen des brevets

(11) **EP 1 142 217 B1**

(12) **EUROPEAN PATENT SPECIFICATION**

(45) Date of publication and mention
of the grant of the patent:
**19.05.2004 Bulletin 2004/21**

(51) Int Cl.[7]: **H04L 12/56**, H04Q 11/04

(21) Application number: **98962673.4**

(86) International application number:
**PCT/IT1998/000373**

(22) Date of filing: **21.12.1998**

(87) International publication number:
**WO 2000/038378 (29.06.2000 Gazette 2000/26)**

(54) **ADMISSION CONTROL OF MIXED VBR SOURCES IN BROADBAND NETWORKS**

ZUGANGSSTEUERUNGSVERFAHREN FÜR GEMISCHTE VBR QUELLEN IN
BREITBANDNETZWERKEN

CONTROLE D'ADMISSION DE SOURCES VBR MELANGEES DANS DES RESEAUX A LARGE
BANDE

(84) Designated Contracting States:
**DE FI FR GB IT SE**

(43) Date of publication of application:
**10.10.2001 Bulletin 2001/41**

(73) Proprietor: **Siemens Aktiengesellschaft
80333 München (DE)**

(72) Inventors:
• **MEYER, John, F.
Ann Arbur, MI 48104 (US)**
• **PAGLINO, Roberto
I-13012 Borgo Vercelli (IT)**
• **MONTAGNA, Sergio
I-27015 Landriano (IT)**
• **PUGLISI, Alberto
I-27040 Verrua Po (IT)**

(74) Representative: **Giustini, Delio
Siemens Information and
Communication Networks S.p.A.
Palazzo Gorky
Via Monfalcone, 1
20092 Cinisello Balsamo (IT)**

(56) References cited:
**WO-A-97/01895          US-A- 5 347 511**

**Description**

**Technical Field**

This invention concerns methods of connection admission control (CAC) for ATM networks, whereby requests for admitting and routing a virtual circuit are granted or denied on the basis of currently available network resources (buffer space in the nodes, channel capacity in the links) and quality of service (QOS) requirements. More in particular. the invention addresses a basic issue of recognized importance in the above context, namely how to guarantee QOS for multiplexed variable bit rate (VBR) sources, particularly when the the traffic classes are mixed with respect to their potential multiplexing gains.

**Background**

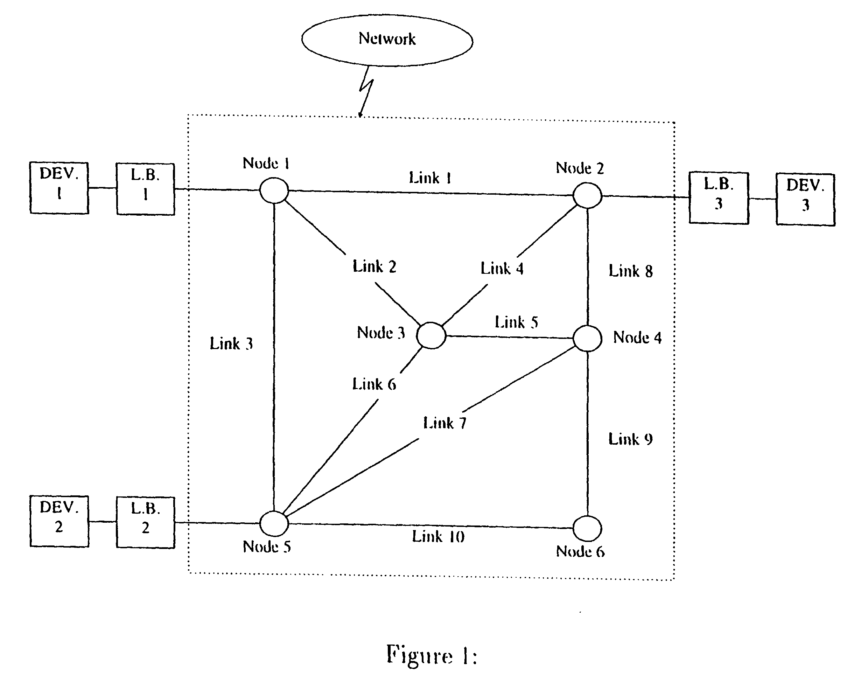

A network in which the method of admission control and routing of requests for virtual circuits of the invention may be practiced is depicted in Figure 1. The means used to estimate both resource availability and prospective resource consumption (by the requested circuit) is based on the concept of an effective bandwidth (EB). In controlling the admission and routing of variable bit rate (VBR) traffic, source classes are typically *mixed* in the sense that some classes can benefit from statistical multiplexing while others cannot. Moreover, such a mix of *statistically multiplexable* (S-VBR) and *nonstatistically multiplexable* (NS-VBR) sources is known to cause nonlinear interactions. Accordingly, if the boundary of the set of admissible sources is conservatively estimated by a linear approximation (for the purpose of determining EBs), the number of falsely rejected connections can become excessive. This problem and certain difficulties associated with solving it are nicely described in the work of Ewalid *et al*. [1]; its solution, however, is left open as a "subject of future work". In a subsequent patent application by the same authors [2], they propose a step in this direction whereby bandwidth is allocated directly to CBR (Constant Bit Rate) sources; available link capacity is then reduced accordingly and the EBs for the remaining classes are computed relative to this residual capacity. Although this approach can reduce the severity of nonlinear interactions, if the remaining VBR classes are mixed (which is likely) then the problem cited above persists.

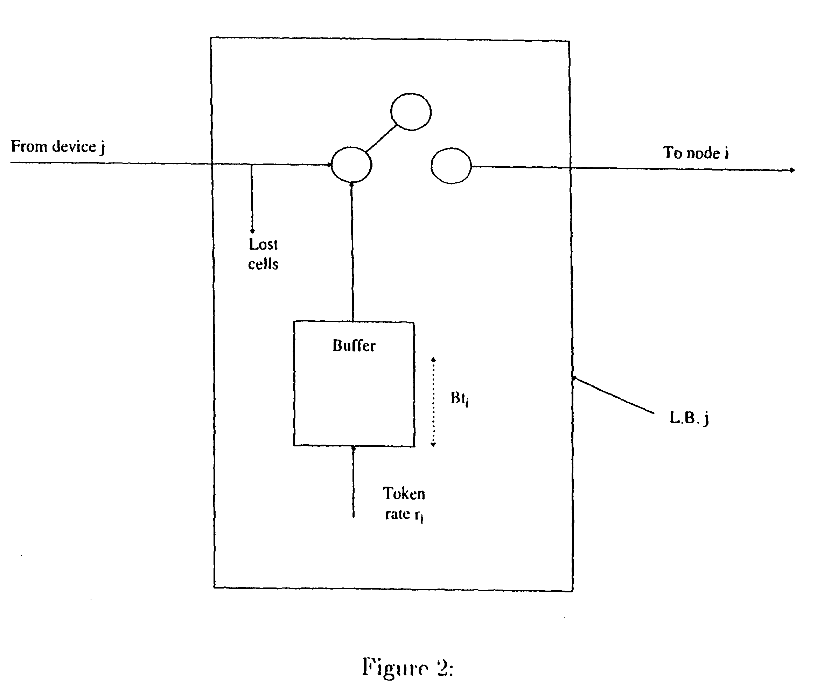

According to [1, 2], traffic sources are represented by worst-case, regulated rate processes. Specifically, regulation is implemented by a leaky bucket, as schematically depicted in Figure 2, with parameters $r$ (the token rate, which regulates the mean input rate), $B_T$ (the token buffer capacity, which bounds the burst size), and $P$ (the peak rate permitted, where $r \leq P$), these are deterministic sources that behave as follows. If $r < P$ then the worst-case arrival process (when so regulated) is a deterministic, on-off, periodic rate process. The duration of an on period is $T_{on} = B_T/(P-r)$, during which the rate is equal to the peak rate $P$. The source is then off (rate = 0) for a duration $T_{off} = B_T/r$. Accordingly, the source is able to transmit the maximum amount of information (burst size) permitted by the leaky bucket, namely $Q = B_T P/(P - r)$; the mean rate is likewise maximized ($= r$) with respect to the period $T = T_{on} + T_{off}$. If $r = P$ then the periodicity disappears, i.e., the output of the regulator becomes a constant bit rate (CBR) source with rate $r$. Heterogeneity is introduced by considering a set

$$J = \{1,2,...,J\}$$

of $J$ traffic classes that are distinguished by leaky buckets with differing parameter values, i.e.. for each $j \in J$, source class $j$ is characterized by the parameter triple $(r_j, B_{T,j}, P_j)$. Individual sources are assumed to be randomly phased and, with respect to such phasing, statistically independent.

With these input assumptions, the analysis in [1, 2] concerns the probabilistic behavior of channel (trunk) utilization at the output of a buffer with capacity $B$. The QOS measure in question is the *saturation probability* $P_{sat}$ where, letting $C$ denote the channel capacity and $S$ the total instantaneous demand on the channel,

$$P_{sat} = \Pr[S > C]. \tag{1}$$

In [1, 2], this is referred to as the "loss probability" (denoted $P_{loss}$) and the no-saturation (or "lossless") case is considered first. To reduce the allocation problem to a single resource (either the buffer or the channel), it is assumed that buffer/bandwidth allocations for a class-$j$ connection are such that both resources are exhausted simultaneously. In other words, if $b_{0,j}$ and $e_{0,j}$ denote the buffer and channel allocations, respectively, then the allocation policy is such that

$$b_{0,j}/B = e_{0,j}/C. \tag{2}$$

Further, if $b_{0,j}$ is identified with the maximum buffer content, an analysis of the buffer's output behavior for an isolated class-$j$ source reveals that

$$b_{0,j} = B_{T,j}\left(1 - \frac{e_{0,j} - r_j}{P_j - r_j}\right), \tag{3}$$

where $r_j \leq e_{0,j} \leq P_j$. Accordingly, if

$$B/C \leq B_{T,j}/r_j \tag{4}$$

then equations (2) and (3) have a unique solution, permitting the bandwidth allocation $e_{0,j}$ to be expressed as

$$e_{0,j} = \frac{P_j}{1 + \frac{B/C}{B_{T,j}}(P_j - r_j)}$$

in terms of the source parameters $(r_j, B_{T,j}, P_j)$ and the ratio $B/C$. By (2), the corresponding buffer allocation is then $b_{0,j} = e_{0,j}B/C$.

On the other hand, if (4) is not satisfied, i.e.,

$$B/C > B_{T,j}/r_j \tag{5}$$

then no such solution exists. In this case, a class-$j$ source is *bandwidth limited* (BL) since, under condition (5), its bandwidth need exceeds what is required (proportionately) of the buffer. Here, a natural choice for the channel is to allocate the mean rate, i.e., $e_{0,j} = r_j$. In turn, by (3), the required buffer space is simply $b_{0,j} = B_{T,j}$. However, in view of the allocation $e_{0,j} = r_j$ and the definition (5) of a BL source, we have

$$e_{0,j}B/C = r_jB/C > B_{T,j} = b_{0,j}.$$

thus violating the proportional allocation policy (2). To preserve the advantages of the latter. the token buffer capacity is artificially increased to a value that just satisfies (4). Specifically, this occurs when $B_{T,j} = r_jB/C$. Policy (2) then applies, resulting in $b_{0,j} = e_{0,j}B/C = r_jB/C$. It is important to note that this is a conservative choice since, by (5), the allocation $r_jB/C$ is greater than the buffer space $B_{T,j}$ actually required by a BL source.

Summarizing the above and selecting the channel as the focus of the analysis (from this point on, buffer allocations are implicit via the assumptions just adopted), the bandwidth $e_{0,j}$ can be be expressed in terms of the traffic and resource parameters as

$$e_{0,j} = \begin{cases} \frac{P_j}{1 + \frac{B/C}{B_{T,j}}(P_j - r_j)} & \text{if } B/C \leq B_{T,j}/r_j \\ r_j & \text{if } B/C > B_{T,j}/r_j \end{cases} \tag{6}$$

In [1, 2], this quantity is called the "effective bandwidth for lossless performance". However, in keeping with our preferred term for the QOS measure (1), we will subsequently refer to $e_{0,j}$ as the *no-saturation effective bandwidth* (NEB) of a class-$j$ source. This is justified by the fact that a connection vector

$$n = (n_1, n_2, ..., n_J),$$

Table 1:

| Notational Differences. | | |
|---|---|---|
| Description | Ewalid *et al.* | Our notation |
| Load due to the *i*th class-*j* source | $u_{ji}$ | $X_{ji}$ |
| Number of class-*j* sources | $K_j$ | $n_j$ |
| Aggregate demand | $U$ | $S$ |
| QOS requirement | $P_{loss} \leq L$ | $P_{sat} \leq e^{-\gamma}$ |

where $n_j$ is the number of sources in class *j*, is admissible with no saturation ($P_{sat} = 0$) if and only if

$$\sum_{j=1}^{J} n_j \epsilon_{0,j} \leq C. \tag{7}$$

(In what follows. the coordinates $n_j$ of $n$ are taken to be non-negative real numbers: all further uses of $n$ are implicitly so qualified.) Further. letting $\omega_j$ denote the fraction of time that the channel is utilized by a class-*j* source, the product $\omega_j e_{0,j}$ is equal to the mean rate $r_j$ permitted by the regulator, whence

$$\omega_j = \frac{r_j}{e_{0,j}}. \tag{8}$$

The quantities given by (6) and (8) are key to the subsequent development in Ewalid *et al.* ([1], Section III), which considers statistical multiplexing gains with possible losses due to saturation. To complete our summary of this background, we find it convenient to employ certain notation that conforms more closely with Kelly [3]. Specifically, the translation to our usage is given by Table 1, where some of these differences have already been noted.

The variable $X_{ji}$ represents the instantaneous utilization of the channel due to the *i*th class-*j* source. Accordingly, for a given connection vector $n = (n_1, n_2, ..., n_J)$, the aggregate demand on the channel is

$$S = \sum_{j=1}^{J} \sum_{i=1}^{n_j} X_{ji} = \sum_{j=1}^{J} n_j X_{ji}. \tag{9}$$

As noted in the above table, the quality of service requirement is specified in terms of the saturation probability $P_{sat}$ (1) and the QOS parameter $\gamma$ (where $\gamma > 0$). Hence, connection vector $n$ is *admissible* (under this QOS constraint) if and only if its corresponding demand $S$ (9) satisfies

$$\Pr[S > C] \leq e^{-\gamma}. \tag{10}$$

Also, as in [3], we choose to deal directly with the log moment generating function (LMGF) of a load variable $X_{ji}$. Specifically, for each source class *j*, this LMGF is the function

$$M_j(s) = \log E[e^{sX_{ji}}] = \log \int_0^\infty e^{sx} dW_j(x). \tag{11}$$

where $s \geq 0$ and $W_j$ is the probability distribution function of $X_{ji}$ ($i = 1, 2, .... n_j$). i.e.,

$$W_j(x) = \Pr[X_{ji} \le r].\tag{12}$$

(In [1, 2], $M_j(s)$ denotes $E[e^{sX_{ji}}]$ whereas (11) refers to its logarithm.)

In terms of the above terminology and notation. the basic question considered is whether a connection vector n is admissible, i.e.. its corresponding channel load $S$ satisfies (10). To this end, it is assumed throughout that the system is stable in the sense that $E[S] \le C$. Equivalently, under the traffic assumptions that yield (6) and (8), this stability condition for $n$ can be equivalently expressed as

$$\sum_{j=1}^{J} n_j w_j \epsilon_{0,j} \le C'.\tag{13}$$

If, further, condition (7) is satisfied then there is no saturation and, hence, n is trivially admissible. The region in which this occurs is called the *admissible set for no saturation* (or "lossless performance" in the terminology of [1, 2]), denoted $A_0$, where by (7),

$$A_0 = \left\{ n \mid \sum_{j=1}^{J} n_j e_{0,j} \le C \right\}.\tag{14}$$

On the other hand, if saturation is possible, i.e., $\Pr[S > C] > 0$, then under this condition (together with (13)), Chernov's bound [4] applies to the random variable $S - C$. This yields a bound on the saturation probability given by

$$P_{\text{sat}} \le e^{-F_n(s^*)},\tag{15}$$

where

$$F_n(s) = sC - \sum_{j=1}^{J} n_j M_j(s)\tag{16}$$

and $s^*$ is the (unique) value of $s$ that maximizes $F_n(s)$, i.e.,

$$F_n(s^*) = \sup_{s \ge 0} F_n(s).\tag{17}$$

In other words, the bound (15) insures that the QOS requirement (10) will be satisfied for connection vector $n$ if

$$F_n(s^*) \ge \gamma.\tag{18}$$

Combining (14) with condition (18) so as to permit saturation, the *admissible set* (determined by the Chernov bound relative to the QOS parameter $\gamma$ and, implicitly, the resource parameters $B$ and $C$) can thus be expressed as

$$A_\gamma = \{n \mid n \in A_0 \text{ or } F_n(s^*) \ge \gamma\}.\tag{19}$$

Although $A_\gamma$ is nonlinear, by using the tangent hyperplane construction of [5, 3], one can obtain a linear, conservative estimate of $A_\gamma$. More precisely, letting $n^*$ denote an appropriately chosen tangent point on the boundary $\partial A_\gamma$ of $A_\gamma$, the admissible set $A_\gamma$ can be approximated by the set

$$A_\gamma(n^*) = \left\{ n \mid \sum_{j=1}^{J} n_j e_j \le C \right\} \qquad (20)$$

where

$$e_j = \frac{M_j(s^*)}{s^* - \gamma/C}. \qquad (21)$$

and $s^*$ is the value of $s$ that yields the supremum (17) when $n$ is fixed at the tangent point $n^*$.

In view of the linear nature of (20), the quantity $e_j$ ($j \in J$) can be legitimately referred to as the *effective bandwidth* (EB) of a class-$j$ traffic source. As defined in [1], the *statistical multiplexing gain* $g_j$ compares the EB given by (21) with the NEB (6), i.e.,

$$g_j = e_{0,j}/e_j, \qquad (22)$$

Further, if bandwidth is allocated to class-$j$ sources only then VBR source class $j$ is *statistically multiplexable* (S-VBR) if $g_j > 1$; else ($g_j = 1$) it is *nonstatistically multiplexable* (NS-VBR). Assuming that $B/C$ remains fixed as $B$ varies with $C$, there then exists a *critical bandwidth* $C_{c,j}$ for source class j (when considered in isolation) where $C_{c,j}$ is the smallest capacity such that $g_j > 1$ whenever $C > C_{c,j}$. Moreover, in terms of the source characteristics, this can be simply expressed ([1], Proposition 4.2) as

$$C_{c,j} = \frac{e_{0,j}\gamma}{\log(1/\omega_j)}. \qquad (23)$$

Hence, for given values of $C$ and $\gamma$, class $j$ is S-VBR if and only if

$$\frac{C}{e_{0,j}}\log(1/\omega_j) > \gamma. \qquad (24)$$

This distinction between S-VBR and NS-VBR classes is an important contribution of [1] since, as shown in their subsequent development (beginning with Proposition 4.3), the nature of $A_\gamma$ (19) and the accuracy of its approximation depend on which types (S-VBR and/or NS-VBR) are involved. If all classes are NS-VBR then A( = A0 and the effective bandwidths are given by the (0,j . If all classes are S-VBR then (20) provides a linear, conservative estimate of A( and, om tirm, a relatively straightforward means of computing the Ebs. However, if connection requests range over a proper mix of S-VBR and NS-VBR classes (including CBR) then, as demonstrated in [1], there are nonlinear interactions which can severely reduce the accuracy of a linear (hyperplane) approximation. As a consequence, there is an increase in the number of admissible connections (relative to A( ) that get falsely rejected, thereby reducing resource (bandwidth, buffer) utilization.

WO 9701895 discloses a method involving an ATM network which has ATM switches interconnected and related to a connection admission controller. The controller determines if a new connection request can be accommodated within the current limits of the system. When a request is made the associated connection parameters are retrieved. These are quantised in a non-linear manner.

These parameters are then used via a look-up table to extract the virtual bandwidth the connection represents. The bandwidth available on the link is established and compared with the request to decide its acceptability. The table is created in a set-up phase using exponential queue length bounds and a Martingale function.

The above mentioned look up table is therefore a table of pre-computedvirtual bandwidths, where these values are independent of how much bandwidth (buffer space) has been allocated.

**Object and summary of the invention**

In view of this background, there is a need for innovative CAC methods that avoid the difficulties just mentioned. Moreover, if these methods are to profit from improvements afforded by te use of a modified Chernov bound (first considered by Hui [5] in this context), this requires a careful investigation of issues concerning multiplexability and effective bandwidth computation for the traffic classes in question.

In response to this need, the inventive methods disclosed in the section that follows feature a CAC algorithm which efficiently and accurately controls the admission/routing a diverse mix of ATM traffic demands, ranging from highly multiplexable S-VBR sources to nonstatistically multiplexable CBR demands. Innovative ancillary methods devised in the development of this algorithm include a means of ordering traffic classes according to their relative multiplexability, formulating linear upper and lower bounds (hyperplanes) of an improved admissible connection region (based on the modified Chernov bound), and computing EB-entries for the table on which the CAC algorithm is based. The novel method of the invention.

**Brief description of the drawings**

Figure 1 schematically shows a typical network to which the method of the invention refers.
Figure 2 shows the scheme of a so called leaky bucket regulator.
Figure 3 shows how the characteristic $G_{n_j}(s^*)$ comprises with the QOS parameter and the characteristic $F_{n_j}(s^*)$ of the BCB exponent.
Figure 4 is a diagram showing the admissible sets and tangent hyperplanes.
Figure 5 is a diagram showing the accuracy characteristic of admissible set.
Figure 6 is a flow sheet representation of the table-based algorithm of the invention.
Figure 7 shows a set of accuracy characteristics of the table-based algorithm of the invention.
Figure 8 shows the probabilities of a CBR connection request for the algorithm of the prior art and for the TB (Table Based) algorithm of the invention.

**Detailed description of a preferred embodiment of the invention**

The invention will now be described in detail in the sections that follow. The first section (Case 1) considers the admissible set given by the modified Chernov bound (MCB) and, in terms of the traffic and resource parameters, derives necessary and sufficient conditions for class $j$ sources to be S-VBR.

The second section (Case 2) details the analysis and computations that accurately determine MCB-based effective bandwidths (EBs) when all classes are S-VBR.

The third section (Case 3) responds directly to the need identified in the last paragraph of the background section. namely accurate admission control when the considered traffic is a mix of S-VBR and /NS-VBR classes.

The preferred algorithm of the invention is described in the section entitled "CAC algorithm for mixed traffic" (that is for Case 3).

**MCB-Based Multiplexability**

To formulate the admissible set determined by the modified Chernov bound, let $M_S$ denote the LMGF of the aggregate load $S$, i.e., by (9),

$$M_S(s) = \log E[e^{sS}] = \sum_{j=1}^{J} n_j M_j(s). \qquad (25)$$

and let $\sigma_n^2(s)$ denote the second derivative (with respect to $s$) of (25), i.e.,

$$\sigma_n^2(s) = \frac{\partial^2}{\partial s^2} M_S(s) = \sum_{j=1}^{J} n_j M_j''(s). \qquad (26)$$

Assume further that saturation is possible (Pr[$S > C$] > 0) and, as with (17), let $s^*$ be the value of s that maximizes $F_n$ ($s$). Then the refined large deviations approximation of $P_{sat}$ (first considered by Hui [5] in this context) is

$$P_{sat} \approx \frac{e^{-Fn(s^*)}}{s^*\sqrt{2\pi\sigma_n^2(s^*)}}.$$

The above derives from the modified Chernov bound (MCB) where, letting

$$K_n(s) = s\sqrt{2\pi\sigma_n^2(s)}, \tag{27}$$

the BCB (15) is multiplied by the factor $1/K_n(s^*)$, i.e.,

$$P_{sat} \leq \frac{e-F_n(s^*)}{K_n(s^*)}. \tag{28}$$

Accordingly, taking logarithms on both sides of (28), the QOS requirement log $P_{sat} \leq -\gamma$ will be satisfied by a connection vector $n$ if

$$-F_n(s^*) - \log K_n(s^*) \leq -\gamma.$$

Equivalently, letting

$$G_n(s^*) = F_n(s^*) + \log K_n(s^*). \tag{29}$$

the admission criterion is simply

$$G_n(s^*) \geq \gamma. \tag{30}$$

When compared with (18), this is a more liberal condition since, except for extreme values of $n$ (either very close to the boundary of $A_0$ or very close to causing instability), log $K_n(s^*) > 0$ and therefore $G_n(s^*) > F_n(s^*)$.

If there is no saturation then, as earlier (14), admissibility is characterized by the set $A_0$. Combining these two cases, the corresponding *admissible set* is

$$A_\gamma^m = \{n|n \in A_0 \text{ or } G_n(s^*) \geq \gamma\}, \tag{31}$$

where the superscript m (for modified) distinguishes (31) from the basic set (19) reviewed in the previous section.

Under the traffic and regulation assumptions that led to (6) and (8), let us now consider the problem of determining effective bandwidths that comply with (31). Given a connection vector n for which saturation is possible ($n \in A_\gamma^m - A_0$), $F_n(s^*)$ and log $K_n(s^*)$ can be formulated as follows in terms of the resource and traffic parameters. (Since the first of these is the essential ingredient of the BCB-based analysis [1], its expression there is similar, the differences being notational.) Recalling the assumptions of the Background section, the load variables $X_{ji}$ are binomially distributed. Specifically, $X_{ji}$ is equal to the NEB $e_{0,j}$ when a type-$j$ source is utilizing the channel; else it is 0. Accordingly, the fraction of time $\omega_j$ (under steady-state conditions) that the channel is busy (due to such a source) can be identified with the probability

$$\omega_j = P[X_{ji} = e_{0,j}]$$

and, therefore,

$$1 - \omega_j = P[X_{ji} = 0].$$

Hence, by definition of LMGF (11), it follows that

$$M_j(s) - \log E[e^{sX_{ji}}]$$

$$= \log(e^{s0}(1 - \omega_j) + e^{se_{0,j}}\omega_j)$$

$$= \log(1 - \omega_j + \omega_j e^{se_{0,j}}). \tag{32}$$

Substituting (32) in (16), $F_n(s)$ can thus be expressed as

$$F_n(s) = sC - \sum_{j=1}^{J} n_j \log(1 - w_j + w_j \epsilon^{se_{0,j}}). \tag{33}$$

Moreover, since $n$ is such that saturation is possible ($n \notin A_0$), the $s^*$ associated with $n$ is the unique solution of $F'_n(s) = 0$. Specifically, taking the first derivative of (33) with respect to $s$, we have

$$F'_n(s) = C - \sum_{j=1}^{J} \frac{n_j w_j e_{0,j} e^{se_{0,j}}}{1 - w_j + w_j e^{se_{0,j}}}$$

and equating the above with 0, it follows that $s^*$ is the unique $s$ that satisfies

$$\sum_{j=1}^{J} \frac{n_j w_j \epsilon_{0,j} \epsilon^{se_{0,j}}}{1 - w_j + w_j \epsilon^{se_{0,j}}} = C. \tag{34}$$

Before considering a linear approximation of the boundary of (31), it is helpful to first address the question of statistical multiplexability with respect to this modified admissible set. More precisely, if bandwidth is allocated to class-$j$ sources in isolation, one seeks conditions under which the number of admissible sources can exceed the maximum permitted with no saturation. In this regard (and with a slight abuse of notation), let $n_j$ denote the connection vector consisting of $n_j$ class-$j$ sources only, i.e.,

$$n_j = (0,0,...,0,n_j,0,...,0),$$

where either context or explicit qualification will serve to provide the correct vector vs. scalar interpretation. If $n_j \le C/e_{0,j}$ then, by (14), there is no saturation. Further, by the stability condition (13), the maximum value of $n_j$ (ignoring the QOS requirement) is $C/(\omega_j e_{0,j})$. Accordingly, if we let $n_{0,j}$ denote the maximum no-saturation value for capacity $C$, i.e.,

$$n_{0,j} = \frac{C}{e_{0,j}} \tag{35}$$

then saturation occurs in the interval

$$N_j = \{n_j \mid n_{0,j} < n_j \le n_{0,j}/\omega_j\}. \tag{36}$$

Moreover, if $G_{n_j}(s^*) \ge \gamma$ then. by (30), $n_j$ is admissible, yielding a statistical multiplexing gain. Hence, what remains is an analysis that expresses $G_{n_j}(s^*)$ in terms of traffic and resource parameters.

If $\omega_j = 1$ then the interval $N_j$ is empty and nothing more needs to be done. Note that this is consistent with the definition (8) of $\omega_j$, where its value is 1 if class-$j$ is bandwidth limited (5), including the CBR extreme where $e_{0,j} = P_j = r_j$. Suppose then that $\omega_j < 1$ and let $n_j \in N_j$. Then by (34) when restricted to class-$j$ sources. the corresponding value of $s^*$ must satisfy

$$\frac{n_j \omega_j e_{0,j} e^{s^* e_{0,j}}}{1 - \omega_j + \omega_j e^{s^* e_{0,j}}} = C.$$

Solving for $s^*$ in terms of $n_j$, $n_{0,j}$, and $\omega_j$, the resulting solution can be expressed as

$$s^* = \frac{n_{0,j}}{C} \log \left( \frac{n_{0,j}(1 - w_j)}{(n_j - n_{0,j})w_j} \right). \qquad (37)$$

In turn, an explicit expression of $G_n(s^*)$ for class-$j$ sources can be obtained by substituting $n_j$ for $n$ and $s^*$ for $s$ in the formulas for $F_n(s)$ and $\log K_n(s)$. Specifically, for the two summands of (29), if $n = n_j$ then by (33),

$$F_{n_j}(s^*) = s^* C - n_j \log(1 - \omega_j + \omega_j e^{s^* e_{0,j}})$$

and by (26)-(27),

$$\log K_{n_j}(s^*) = \log s^* \sqrt{2\pi n_j M''_j(s^*)}.$$

Substituting (37) for $s^*$ in each of the above and after some algebraic simplification,

$$F_{n_j}(s^*) = n_{0,j} \left( \log \left( \frac{n_{0,j}}{n_j w_j} \right) + (n_j/n_{0,j} - 1) \log \left( \frac{n_j - n_{0,j}}{n_j(1 - w_j)} \right) \right) \qquad (38)$$

and

$$\log K_{n_j}(s^*) = \frac{1}{2} \log \left( \frac{2\pi n_{0,j}(n_j - n_{0,j})}{n_j} \right) + \log \left( \log \left( \frac{n_{0,j}(1 - w_j)}{(n_j - n_{0,j})w_j} \right) \right) \qquad (39)$$

Since $G_{n_j}(s^*) = F_{n_j}(s^*) + \log K_{n_j}(s^*)$, the sum of (38) and (39) thus expresses $G_{n_j}(s^*)$ as a function of $n_j$ and the associated traffic and resource parameters.

Taking the limit of this sum as $n_j$ approaches its lower bound $n_{0,j}$ from above (in which case $s^* \to \infty$), we find that

$$\lim_{n_j \to n_{0,j}+} G_{n_j}(s^*) = -\infty.$$

Similarly, as $n_j$ approaches the upper limit imposed by stability,

$$\lim_{n_j \to n_{0,j}/w_j} G_{n_j}(s^*) = -\infty.$$

However, with the exception of values very near these extremes (which will not arise in practice). $G_{n_j}(s^*)$ is a nicely behaved function of $n_j$ over the interval (36). Specifically, it has a value which occurs when $n_j$ is quite close to $n_{0,j}$; beyond this point, $G_{n_j}(s^*)$ decreases montonically with increasing $n_j$ and remains larger than $F_{n_j}(s^*)$ until $n_j$ is very close to $n_{0,j}/\omega_j$.

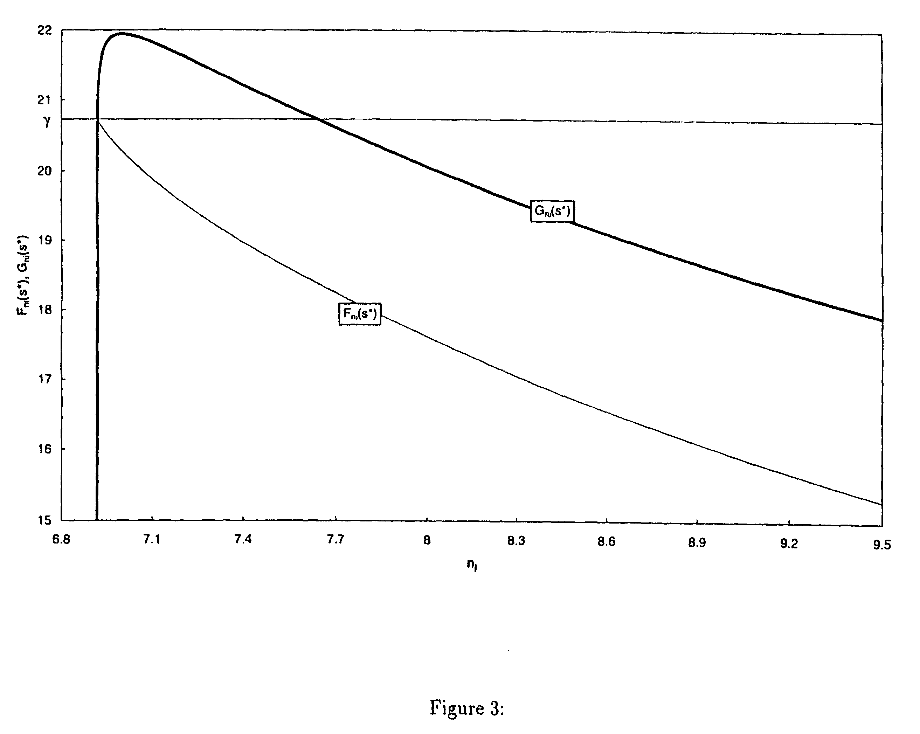

Figure 3 depicts the behavior of $G_{n_j}(s)$ (the bold curve) in the region surrounding its maximum value, as it compares with the value of $\gamma$ (20.72; the horizontal line) that bounds $P_{sat}$ by $e^{-\gamma} = 10^{-9}$. The channel capacity is taken to be $C = 150$ Mbps and the sources considered are very bursty, i.e..

$$\omega_j = 0.05 \text{ and } e_{0,j} = C \log(1/\omega_j)/\gamma = 21.69\text{Mbps.} \tag{40}$$

The figure also includes a plot of $F_{n_j}(s^*)$, as given by (38), permitting a comparison of $G'_{n_j}(s^*)$ with the magnitude of the BCB exponent.

In view of the above, whether a traffic class can profit from statistical multiplexing can be decided as follows. Let $m_j(C)$ denote the maximum value of $G_{n_j}(s^*)$, i.e.,

$$m_j(C) = \max_{n_j \in N_j} G_{n_j}(s^*). \tag{41}$$

Then, relative to the QOS exponent $\gamma$, it follows that class $j$ is S-VBR for capacity $C$ if and only if

$$m_j(C) \geq \gamma. \tag{42}$$

*Sufficiency*: If $m_j(C) \geq \gamma$ then there exist $n_j > n_{0,j}$ satisfying (30). Due to the decreasing nature of $G_{n_j}(s^*)$ beyond $m_j(C)$ (see Figure 3), the largest such $n_j$ occurs where $G_{n_j}(s^*) = \gamma$, resulting in an effective bandwidth $e_j = C/n_j$. Hence, the statistical multiplexing gain (22) is $g_j = e_{0,j}/e_j = n_j/n_{0,j} > 1$ and, by definition, class-$j$ is S-VBR.

*Necessity:* If $m_j(C) < \gamma$ then, for all $n_j \in N_j$, (30) is never satisfied. By (31), $A^{\underline{m}}$ thus coincides with the no-saturation region $A_0$, in which case the effective bandwidth is $e_{0,j}$. Hence, $g_j = 1$, i.e., class $j$ is NS-VBR.

Comparing (42) with the BCB-based criterion (24) of [1], namely

$$\frac{C}{e_{0,j}}\log(1/\omega_j) > \gamma,$$

by (38), the quantity on the left is just the maximum value of $F_{n_j}(s^*)$ that results as $n_j \to n_{0,j} = C/e_{0,j}$ from above. However, because $n_{0,j}$ is on the boundary of $A_0$, the inequality must be proper to insure that $g_j > 1$. On the other hand. since $G_{n_j}(s^*)$ is maximized within the interval $N_j$, we still have $g_j > 1$ at the extreme where equality holds. Accounting for this technicality, the *critical bandwidth* of source class $j$ is defined to be the least capacity $C_j$ such that. for all $C \geq C_j, g_j > 1$. (Our use of $C_j$ here distinguishes it from the BCB-based critical bandwidth $C_{c,j}$ defined in [1]; see the definition following (22) and note that, there, $C$ must property exceed $C_{c,j}$) Then by (42) and the fact that $m_j(C)$ is monotonic and strictly increasing with increasing $C$ (the other parameter values being fixed),

$$C_j = \text{the unique C that satisfies } m_j(C) = \gamma. \tag{43}$$

$C_j$ thus provides an alternative characterization of statistical multiplexability, for if $C \geq C_j$ then, by the definition of $C_j$, class $j$ is S-VBR. Conversely, if class $j$ is S-VBR then, by (42), $m_j(C) \geq \gamma$ and, since $m_j(C)$ increases strictly with $C$, $C \geq C_j$. Consequently, class j is S-VBR for capacity C if and only if

$$C \geq C_j \text{ or, equivalently, } C/C_j \geq 1. \tag{44}$$

Although the quantities (41) and (43) that characterize an S-VBR class (according to (42) and (44), respectively) agree in form with their BCB-based counterparts, it is important to observe that they differ quantitatively. This is due to the improved nature of the MCB which, for $0 < \omega_j < 1$ (as assumed at the outset of this development), implies

$$m_j(C) > \frac{C}{e_{0,j}} \log(1/\omega_j) \qquad (45)$$

or, alternatively, comparing the critical bandwidths,

$$C_j < C_{c,j}, \qquad (46)$$

thereby altering the S-VBR/NS-VBR dichotomy. Consequently, a class that is NS-VBR according to the BCB-based analysis can become S-VBR, as decided by (42) or (44).

This is illustrated by the example considered in Figure 3, where we see that $F_{n_j}(s^*)$ attains a maximum value of $\gamma$ at the limit point where $n_j = n_{0,j}$. Hence, although right on the edge of being statistically multiplexable, it is nevertheless NS-VBR with respect to the BCB-based definition. On the other hand, since the maximum value of $G_{n_j}(s^*)$ exceeds $\gamma$, this class can indeed profit from statistical multiplexing, where the computation of $e_j$ reveals a gain of $g_j = 1.105$. Consequently, relative to allocations that would result from its NS-VBR classification according to (24), this "upgrade" to S-VBR status afforded by (42) results in a 10% increase in the maximum number of admissible connections. Similarly, comparing critical bandwidths for the assumed values (40) of the source parameters. $C_{c,j} = 150$ Mbs whereas a numerical solution of $m_j(C_j) = \gamma$ yields a critical bandwidth of $C_j = 141.2$ Mbps.

Generally, unlike the BCB-based analysis, there are no simply expressed solutions of $m_j(C)$ and $C_j$ in terms of the underlying traffic and resource parameters. However, based on the formulation of $G_{n_j}(s^*)$ given by the sum of (38) and (39), each is easily determined numerically. Moreover, the absence of closed-form solutions does not diminish their utility since effective bandwidth computations involving multiple S-VBR traffic classes must likewise rely on numerical computations (whether based on the BCB or MCB). Indeed, the quantities $m_j(C)$ and $C_j$ play important roles in the development that follows since the algorithms we describe presume an accurately quantified S-VBR/NS-VBR distinction.

To set the stage for these algorithms, we suppose that the traffic mix $J = \{1,2,...,J\}$ has at least two classes (otherwise $J$ is effectively an isolated class and can be treated as above). Then, as in the BCB-based analysis of [1] but in terms of our modified criteria, the problem of computing effective bandwidths (EBs) differs considerably according to the following three cases.

Case 1: $\max_{j \in J} m_j(C) < \gamma$. Here, by (42), no class is S-VBR (all are NS-VBR) and, since $G_n(s^*) \leq \max_{j \in J} m_j(C), G_n(s^*) < \gamma$. Hence, by (31), $A\frac{m}{\gamma} = A_0$.

Case 2: $\min_{j \in J} m_j(C) \geq \gamma$. Again by (42), this says that all source classes are S-VBR. In this case, $A\frac{m}{\gamma} \supset A_0$ and, moreover, their boundaries are disjoint.

Case 3: Neither of the above, i.e.,

$$\exists_{j,j'} \in J \text{ such that } m_j(C) \geq \gamma \text{ and } m_{j'}(C) < \gamma. \qquad (47)$$

As a consequence, certain points on the boundary $A\frac{m}{\gamma}$ are likewise on the boundary of $A_0$ while others lie properly outside of $A_0$.

In Case 1, nothing can be gained by statistical multiplexing since all classes are NS-VBR; hence the EBs are just the NEBs $e_{0,j}$ for all $j \in J$. In other words, there is no need to approximate $A\frac{m}{\gamma}$ since it coincides with $A_0$. Case 2, on the other hand, is the one for which the tangent hyperplane approximation is intended since, in this case, the boundary $\partial A\frac{m}{\gamma}$ of $A\frac{m}{\gamma}$ can be characterized strictly in terms of the modified Chernov bound, i.e.,

$$\partial A_\gamma^m = \{n \mid G_n(s^*) = \gamma\}. \qquad (48)$$

Moreover, since $A^m_\gamma$ has a convex complement [5. 6], the boundary $\partial A^m_\gamma$ is concave. Hence, with an appropriately chosen tangent point $n^*$, the corresponding hyperplane provides a surprisingly accurate yet conservative approximation of $\partial A^m_\gamma$.

By its definition, Case 3 involves a proper mix of of S-VBR and NS-VBR classes and, hence, the boundary

of $A^m_\gamma$ gets distorted by the influence of the NS-VBR classes. As demonstrated in [1] and emphasized in their concluding remarks, this interaction can preclude an accurate linear approximation of the admissible set. Consequently, even though the constructions and computations described below likewise apply to Case 3 (since there exist admissible connection vectors in $A^m_\gamma - A_0$), the EBs so determined can be too conservative, resulting in an underutilization of system resources.

The remainder of this section presumes Case 2, where we show how to approximate $A^m_\gamma$ and in turn, compute EBs relative to the MCB in a manner analogous to that of (20) and (21) for the BCB. Case 3 is then addressed the section that follows, where we find that the Case 2 computations remain useful, thanks to an innovative decomposition of the bandwidth allocation process.

If all traffic classes $j \in J = \{1,2,...,J\}$ are S-VBR (Case 2), then as noted above, (48) is the boundary of the admissible set $A^m_\gamma$, where $G_n(s^*)$ is given by (29). As the first step in constructing a hyperplane approximation of $\partial A^m_\gamma$, we seek a tangent point $n^* \in \partial A^m_\gamma$ that reflects a balance of the bandwidth needs of individual classes. This is accomplished by initially considering the J corner points of the boundary $\partial A^m_\gamma$ that result when each of the source classes are considered in isolation, where we let

$$n_{c,j} = (0,0,...,0,n_{\text{max},j},0, ... , 0) \qquad (49)$$

denote the corner point determined by class $j$. Since $j$ is S-VBR, by (41) and (42) we have $m_j(C) \geq \gamma$. Then $n_{\text{max},j}$ is either the value of $n_j$ for which $G_{n_j}(s^*) = m_j(C)$ (if $m_j(C) = \gamma$) or the larger of two values of $n_j$ that satisfy $G_{n_j}(s^*) = \gamma$ (if $m_j(C) > \gamma$; see Figure 3, for example). In the latter case, $n_{\text{max},j}$ is computed via a bisectional search over the interval $(n_{0,j}, n_{0,j}/\omega_j)$, beginning with the value

$$n_j = \frac{n_{0,j}(1-\omega_j)}{2\omega_j}.$$

The search presumes that the values tested lie in the region where $G_{n_j}(s^*)$ decreases as a function of $n_j$ (again see Figure 3). This is indeed the case since i) the initial value is in this region and ii) the region where $G_{n_j}(s^*)$ increases with $n_j$ is a very small interval at the extreme lower end of the search space.

Due to the concavity of $\partial A^m_\gamma$, the hyperplane having the same corner points. i.e., the set

$$H^{\text{opt}}_\gamma = \left\{ (n_1, n_2, \ldots, n_J) \mid \sum_{j=1}^{J} \frac{n_j}{n_{\text{max},j}} = 1 \right\} \qquad (50)$$

bounds the admissible set $A^m_\gamma$ from above. Accordingly, a reasonable approach to selecting a tangent point $n^*$ is to consider the "midpoint" of $H^{\text{opt}}_\gamma$ and then locate $n^*$ on the straight line that connects the origin $(0,0,...,0)$ to this midpoint. In other words, $n^*$ is just the point where this line intersects the boundary $\partial A^m_\gamma$. To describe this construction more precisely, let $\tilde{n}$ denote the midpoint of $H^{\text{opt}}_\gamma$, i.e..

$$\tilde{n} = (\tilde{n}_1, \tilde{n}_2,...,\tilde{n}_J), \qquad (51)$$

where $\tilde{n}_j = n_{\text{max},j}/J$. Note that $\tilde{n}$ indeed lies in $H^{\text{opt}}_\gamma$ since

$$\sum_{j=1}^{J} \frac{\check{n}_j}{n_{\text{max},j}} = \sum_{j=1}^{J} \frac{n_{\text{max},j}/J}{n_{\text{max},j}} = 1$$

and hence, by (50), $\tilde{n} \in H^{\text{opt}}_\gamma$. Moreover, by its definition, it is located in the "middle" of $H^{\text{opt}}_\gamma$, e.g., if $J = 2$, it is the midpoint of the straight line that joins the corner points $(n_{\text{max},1},0)$ and $(0, n_{\text{max},2})$. Alternatively, $\tilde{n}$ can be viewed as "averaging" what can be achieved by sources in isolation, for if we sum the J corner points and divide by J, by definitions (49) and (51) we have

$$\frac{\sum_{j=1}^{J} n_{c,j}}{J} = \tilde{n} \, .$$

Intuitively, therefore, ñ appears to be an appropriate departure point for selecting a point $n^*$ on $\partial A_\gamma^m$ that likewise reflects a balance of the bandwidth needs for individual classes. In the latter regard, we choose to place $n^*$ on the line with endpoints (0,0,...,0) and ñ, i.e, the set of points

$$L = \{k\tilde{n} \mid 0 \le k \le 1\}. \tag{52}$$

Since $H_\gamma^{opt}$ is an outer bound of the admissible set $A_\gamma^m$, (52) must intersect $\partial A_\gamma^m$, the point of intersection being the point we select, i.e., the tangent point for the subsequent hyperplane construction is given by

$$n^* = L \cap A_\gamma^m. \tag{53}$$

Accordingly, by definitions (52) and (31), $n^*$ can be computed using a bisectional search along $L$ that begins with $k = 1/2$. At each iteration of the search, the point $k\tilde{n}$ is first tested to see whether the quantity $G_{k\tilde{n}}(s^*)$ is defined. If not, then $k\tilde{n}$ either lies property within $A_0$ or fails to satisfy the stability condition (13). In the first case, the upper half-section is the next to be bisected; if unstable, the lower half-section is chosen for the next iteration. If $G_{k\tilde{n}}(s^*)$ is defined, the difference

$$D(k) = G_{k\tilde{n}}(s^*) - \gamma$$

is then computed. When $D(k) = 0$ (or if the section length has become sufficiently small) then $n^* = k\tilde{n}$. Otherwise the lower or upper half-section is the next to be bisected according as $D(k) < 0$ or $D(k) > 0$. Tangent Hyperplane and Effective Bandwidths

Let us now consider the construction of the hyperplane that is tangent to $\partial A_\gamma^m$ at the point $n^*$ determined above. i.e., the linear approximation that defines effective bandwidths relative to the modified Chernov bound. Although similar to Hui's construction [5, 6], the formulation is somewhat more complicated due to the log $K_n(s^*)$ term of $G_n(s^*)$.

Let $H_\gamma^m$ denote the hyperplane in question, let $g$ be the function whose value at $n$ is $G_n(s^*)$, i.e..

$$g(n) = G_n(s^*)$$

and let $\nabla g$ be the gradient of $g$, i.e.,

$$\nabla_g = (\frac{\partial g}{\partial n_1}, \frac{\partial g}{\partial n_2}, ..., \frac{\partial g}{\partial n_J}).$$

Then relative to the surface

$$\partial A_\gamma^m = \{n \mid g(n) = \gamma\}$$

the vector $\nabla g(n)$ (i.e., the value of $\nabla g$ at point $n$) is normal to the hyperplane that touches $\partial A_\gamma^m$ at $n$. Accordingly, letting $H_\gamma^m$ denote this hyperplane when the tangent point is $n^*$, the latter consists of all points $n$ such that $n - n^*$ is perpendicular to $\nabla g(n^*)$, i.e., the set

$$H_\gamma^m = \{n \mid (n - n^*) \bullet \nabla g(n^*) = 0\} \tag{54}$$

where $\bullet$ denotes the inner (dot) product. If, further, we let $e_j^m$ denote the effective bandwidth of a class-$j$ source relative

to $H^m_\gamma$ (analogous to the EBs (21) associated with the BCB), then we also want

$$H^m_\gamma = \{n \mid \sum_{j=1}^{J} n_j e^m_j = C\}.\qquad(55)$$

Exploiting the equivalence of the conditions which define (54) and (55), the EBs $e^m_j$ can be computed as follows.

We first consider the coordinates of $\nabla g$, where we recall that $g(n) = G_n(s^*)$ and, making similar abbreviations for the components of (29), we let

$$f(n) = F_n(s^*) \text{ and } h(n) = \log K_n(s^*).$$

Then, by the linearity of $\nabla$,

$$\nabla g = \nabla(f + h) = \nabla f + \nabla h$$

with the $j$th coordinate of $\nabla g$ being

$$\frac{\partial g}{\partial n_j} = \frac{\partial f}{\partial n_j} + \frac{\partial h}{\partial n_j}.\qquad(56)$$

This decomposition is useful since $\nabla f$ is just the gradient that results when the hyperplane is constructed relative to the basic Chernov bound. This is due to the fact that the MCB reduces to the BCB if $K_n(s^*) = 1$, in which case $\nabla h = (0.0,....0)$.

Accordingly, as established in [6] (Theorem 3).

$$
\begin{aligned}
\frac{\partial f}{\partial n_j} &= \frac{\partial}{\partial n_j}\left(C s^* - \sum_{i=1}^{J} n_i M_i(s^*)\right) \\
&= C\frac{\partial s^*}{\partial n_j} - \frac{\partial}{\partial n_j}\left(\sum_{i\neq j} n_i M_i(s^*)\right) - \frac{\partial}{\partial n_j} n_j M_j(s^*) \\
&= C\frac{\partial s^*}{\partial n_j} - \sum_{i\neq j} n_i \frac{\partial}{\partial n_j} M_i(s^*) - n_j \frac{\partial}{\partial n_j} M_j(s^*) - M_j(s^*) \\
&= C\frac{\partial s^*}{\partial n_j} - \sum_{i=1}^{J} n_i M'_i(s^*)\frac{\partial s^*}{\partial n_j} - M_j(s^*) \quad (\text{chain rule, where } M'_i(s^*) = \frac{\partial}{\partial s^*} M_i(s^*)) \\
&= \left(C - \sum_{i=1}^{J} n_i M'_i(s^*)\right)\frac{\partial s^*}{\partial n_i} - M_j(s^*)
\end{aligned}
$$

However, by the definition of $s^*$,

$$\sum_{i=1}^{J} n_i M'_i(s^*) = C,\qquad(57)$$

thus nullifying the first term on the right. Hence, for $j = 1,2,...,J$, the value of this derivative at point $n \in \partial A^m_\gamma$ is just

$$\frac{\partial f}{\partial n_j}(n) = -M_j(s^*) \tag{58}$$

In view of (58), we see that $\nabla f(n)$ depends on the tangent point $n$ only to the extent that $n$ influences $s^*$, leading to the relatively simple expression (21) of effective bandwidth associated with the BCB. On the other hand. as revealed in the following formulation of $\nabla h$, the gradient $\nabla g = \nabla f + \nabla h$ for the MCB depends directly on $n$ through quantities such as $\sigma_n^2(s^*)$. Moreover, unlike $\nabla f$ where dependence on the partial derivatives $\frac{\partial s}{\partial n_j}$ is nullified by (57), these derivatives influence $\nabla g$ through their effect on $\nabla h$.

In keeping with the above remarks. we first determine $\frac{\partial s^*}{\partial n_j}$, where taking partial derivatives with respect to $n_j$ on both sides of (57), it follows that

$$M_j'(s^*) + \sum_{i=1}^{J} n_i \frac{\partial}{\partial n_j} M_i'(s^*) = 0.$$

Applying the chain rule for differentiation.

$$M_j'(s^*) + \left[\sum_{i=1}^{J} n_i M_i''(s^*)\right] \frac{\partial s^*}{\partial n_i} = 0$$

and recalling the definition (26) of $\sigma_n^2(s)$, a rearrangement of terms yields

$$\frac{\partial s^*}{\partial n_j} = -\frac{M_j'(s^*)}{\sigma_n^2(s^*)}. \tag{59}$$

In turn, by (27),

$$\frac{\partial h}{\partial n_j} = \frac{\partial}{\partial n_j} \log s^* \sqrt{2\pi\sigma_n^2(s^*)}$$

$$= \frac{\partial}{\partial n_j} \log s^* + \frac{\partial}{\partial n_j} \log \sqrt{2\pi} + \frac{\partial}{\partial n_j} \log \sqrt{\sigma_n^2(s^*)}$$

$$= \frac{\partial}{\partial n_j} \log s^* + \frac{\partial}{\partial n_j} \log \sqrt{\sigma_n^2(s^*)}$$

where, using (59)

$$\frac{\partial}{\partial n_j} \log s^* = \frac{\partial}{\partial s^*}(\log s^*) \frac{\partial s^*}{\partial n_j} = -\frac{M_j'(s^*)}{s^* \sigma_n^2(s^*)}$$

and omitting a detailed justification

$$\frac{\partial}{\partial n_j} \log \sqrt{\sigma_n^2(s^*)} = \frac{1}{2}\left[\frac{M_j''(s^*)}{\sigma_n^2(s^*)} - \frac{M_j'(s^*)}{(\sigma_n^2(s^*))^2}\left(\sum_{i=1}^{J} n_i M_i'''(s^*)\right)\right].$$

Summarizing the above and letting $\frac{\partial g}{\partial n_j}(n)$ denote the value of the $\frac{\partial g}{\partial n_j}$ at $n$,

$$\frac{\partial g}{\partial n_j}(n) = -M_j(s^*) - \frac{M_j'(s^*)}{s^*\sigma_n^2(s^*)} + \frac{1}{2}\left[\frac{M_j''(s^*)}{\sigma_n^2(s^*)} - \frac{M_j'(s^*)}{(\sigma_n^2(s^*))^2}\left(\sum_{i=1}^{J} n_i M_i'''(s^*)\right)\right]. \quad (60)$$

Accordingly, $\frac{\partial g}{\partial n_j}(n)$ depends not only on $n$ and the probabilistic nature of class-$j$ traffic (as conveyed by $M_j(s^*)$ and its derivatives) but also on the LMGFs and derivatives thereof associated with the remaining classes. Specifically, for the traffic in question and any class $j$, $M_j(s^*)$ is given by (32) (with $s = s^*$) and, taking its partial derivatives with respect to $s^*$,

$$M_j'(s^*) = \frac{e_{0,j}\omega_j e^{s^*e_{0,j}}}{1 - \omega_j + \omega_j e^{s^*e_{0,j}}}$$

$$M_j''(s^*) = \frac{e_{0,j}^2\omega_j(1 - \omega_j)e^{s^*e_{0,j}}}{1 - \omega_j + \omega_j e^{s^*e_{0,j}})^2}$$

$$M_j'''(s^*) = \frac{e_{0,j}^3\omega_j(1 - \omega_j)(1 - \omega_j - \omega_j\, e^{s^*e_{0,j}})e^{s^*e_{0,j}}}{1 - \omega_j + \omega_j e^{s^*e_{0,j}})^3}$$

Accordingly, the value $\nabla g(n)$ of $\nabla g$ at any point $n \in \partial A_\gamma^m$ can be computed as follows.

1) Determine the value of $s^*$ that corresponds to $n$.

2) For each traffic class $j$, determine $M_j(s^*)$ and its derivatives via the above equations.

3) For each $j$, substitute the results of 2) (which pertain to all classes) in equation (60), thus obtaining the $j$th coordinate of $\nabla g(n)$.

Applying the above to the tangent point $n^*$ given by (53), let $c(n^*)$ denote the inner product of $n^*$ and $\nabla g(n^*)$, i.e.,

$$c(n^*) = n^* \bullet \nabla g(n^*) = \sum_{j=1}^{J} n_j^* \frac{\partial g}{\partial n_j}(n^*) \quad (61)$$

Then by the first characterization (54) of the tangent hyperplane, the vectors n that comprise $H_\gamma^m$ are just those which satisfy

$$\sum_{j=1}^{J} n_j \frac{\partial g}{\partial n_j}(n^*) = c(n^*),$$

In particular, if bandwidth is allocated to class-$j$ sources only, the vector

$$n_j = (0,0,...,0,n_j,0,...,0)$$

lies in $H_\gamma^m$ iff its $j$th coordinate satisfies

$$n_j = \frac{c(n^*)}{\frac{\partial g}{\partial n_j}(n^*)} \tag{62}$$

Equivalently, by the second characterization (55), $n_j \in H_\gamma^m$ iff

$$n_j = \frac{C}{e_j^m} \tag{63}$$

Hence, equating (62) and (63), the (modified) EB of a class-$j$ source is given by the expression

$$e_j^m = \frac{C}{c(n^*)} \frac{\partial g}{\partial n_j(n^*)} \tag{64}$$

where the means of obtaining $c(n^*)$ and $\frac{\partial g}{\partial n_j}(n^*)$ have already been described.

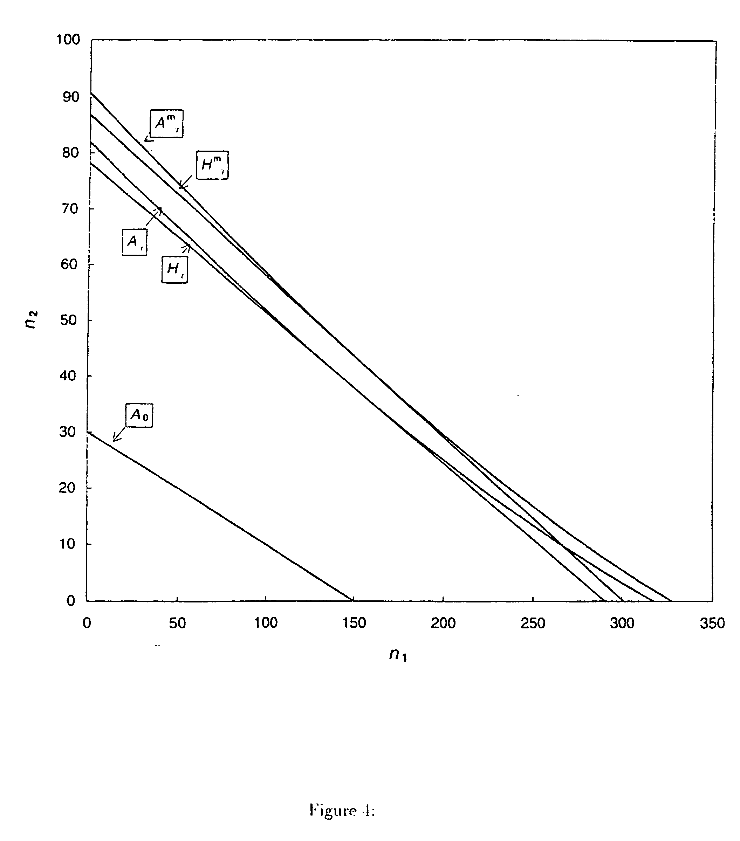

Figure 4 illustrates the above computations for a pair of traffic classes, where $e_{0,1}$ = 1 Mbps, $\omega_1$ = 0.3 and $e_{0,2}$ = 5 Mbps, $\omega_2$ = 0.1. Assuming a channel with capacity $C$ = 150 Mbps, the values of $m_j(C)$ are $m_1(C')$ = 181.76 and $m_2(C)$ = 70.29. Further, taking the QOS requirement to be $P_{sat} \leq 10^{-9}$, $\gamma$ = 20.72; hence, by (42), both classes are S-VBR, With these choices, the curves labeled $A_0$, $A_\gamma$, and $A^m_\gamma$ delineate the connection vectors $n = (n_1, n_2)$ that lie on the boundaries of admissible sets (14), (19), and (31), respectively. Relative to the admissible set $A^m_\gamma$ determined by the MCB, $H_\gamma^m$ is the tangent hyperplane (a line in this case, since $J$ = 2) given by (54) and computed via the formulas derived above. Similarly, the line labeled $H_\gamma$ is the tangent hyperplane for the set $A_\gamma$. More precisely, $H_\gamma$ is the boundary of (20), where the tangent point $n^*$ is chosen in a manner analogous to (53).

These plots reveal several things that appear to be typical of S-VBR traffic. First, one notes that the size of the admissible set is obviously improved through the use of the MCB as opposed to the BCB. Further, we see that the boundaries of these sets are fairly linear; hence, the tangent hyperplane approximations are not overly conservative. One also notes that the choice of the tangent point can make a difference, e.g., if it were selected at a corner point of the boundary, the approximation would be considerably worse.

Regarding the resulting EBs and, in turn, the corresponding statistical multiplexing gains, the figure indicates these as follows. Restricting our attention to the MCB-based allocations, when bandwidth is allocated to class-$j$ sources only, the maximum number $n_j$ of admissible connections is given by the intersection of $H_\gamma^m$ with the $n_j$ axis. In turn, by (63),

$$e_j^m = \frac{C}{n_j}.$$

In particular, for the two classes in question,

$$n_1 = 301 \text{ and } n_2 = 86.8$$

and, hence,

$$e_1^m = 150/301 = 0.498 \text{ and } e_2^m = 150/86.8 = 1.73$$

Accordingly, the statistical multiplexing gains for these classes are

$$g_1 = 1/0.498 = 2.01 \text{ and } g_2 = 5/1.73 = 2.89,$$

respecti vely.

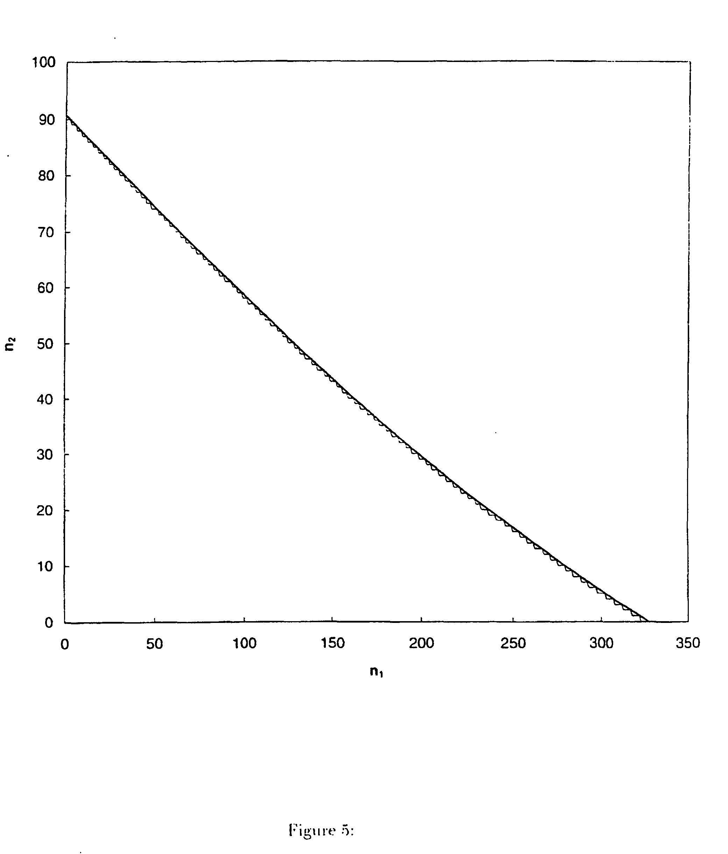

Finally, it is important to note that the MCB-determined admissible set $A^m_\gamma$ is, itself, very accurate. This is illustrated in Figure 5, where the presumed traffic classes are the same as those considered above. Specifically, the boundary $\partial A^m_\gamma$ of $A^m_\gamma$ (the smooth curve) is compared with that determined by a saddlepoint approximation (the jagged curve). The latter is known to provide an essentially exact bound for CAC [7] as well as for seemingly diverse applications such as bounding the error probability of digital optical communication systems (see [8], for example). As attested to by this figure, the two bounds are practically identical. In particular, this says that the tangent point $n*$ lies right on the edge of actual admissibility. In turn, this suggests that, generally, the hyperplane $H_\gamma^m$ provides a highly accurate linear estimate of the actual boundary.

**CAC Algorithm for Mixed Traffic**

This section describes a preferred embodiment of the algorithm of the invention, namely a CAC algorithm that accommodates mixed S-VBR/NS-VBR (Case 3) traffic without compromising the accuracy of the admission decisions. Needless to say, such an algorithm will also apply to pure S-VBR traffic (Case 2); here, however, a direct computation of the EBs using (64) suffices, eliminating the need for the more refined approach that follows.

A key ingredient of the algorithm is a ranking of classes $j \in J$ according to their potential for a multiplexing gain. As suggested by (44), a logical choice in this regard is the reciprocal of the critical bandwidth $C_j$, provided $C_j$ exists ($w_j < 1$); if not ($w_j = 1$), a proper gain is impossible for any finite capacity and its rank is 0. Accordingly, we define the *relative multiplexability* of class $j \in J$ to be the quantity

$$\mu_j = \begin{cases} 1/C_j & \text{if } w_j < 1 \\ 0 & \text{if } w_j = 1 \end{cases} \qquad (65)$$

Since $C_j$ depends only on $\gamma$ and the characteristics of traffic class $j$, $\mu_j$ is likewise determined and, in particular, remains invariant with changes in $C$. In turn, this invariance is useful since the algorithm involves allocations with respect to residual capacities

$$rC, \text{ where } 0 < r \leq C.$$

Specifically, for capacity $rC$, it follows immediately from (44) that class $j$ is S-VBR if and only if

$$\mu_j rC \geq 1. \qquad (66)$$

More importantly, these invariants are indeed indicators of relative multiplexability, for suppose $j$ and $j'$ are classes such that $\mu_j \geq \mu_{j'}$. Then, by (66), $j$ is S-VBR whenever $j'$ is S-VBR. Moreover, if $\mu_j > \mu_{j'}$ then for capacities in the range $C_j \leq rC < C'_j$, class $j$ is S-VBR whereas the lower-ranked class $j'$ is NS-VBR.

In view of the above and without loss of generality, we can assume that the traffic classes are named in an order of nonincreasing relative multiplexability, i.e..

$$\mu_1 \geq \mu_2 \geq \cdots \geq \mu_J. \qquad (67)$$

With respect to a given value of $rC$, it is also convenient to distinguish the highest numbered class that is S-VBR for $rC$, namely the class

$$\ell(r) = \begin{cases} \max\{j \mid \mu_j rC \geq 1\} & \text{if such a } j \text{ exists} \\ 0 & \text{else} \end{cases} \qquad (68)$$

where $\ell(r)$ is referred to as the *least* statistically *multiplexable* (LSM) class for capacity $rC$. Although no such class exists if $\ell(r) = 0$ (all classes are NS-VBR), the terminology is excused by the fact that 1 is the lowest numbered class. Also, when an LSM class does exist ($\ell(r) \geq 1$), there may be other S-VBR classes with the same relative multiplexability; however, among such classes, $\ell(r)$ is the highest numbered. By the ordering assumption (67), the LSM class therefore conveniently distinguishes the subset

$$J_r = \{j \in J \mid j \le \ell(r)\}$$

consisting of all classes that are S-VBR for capacity $rC$.

Assisted by the notions just described, a precomputed table of bandwidth allocations is determined as follows. The channel capacity $C$ is quantized into $K$ levels, resulting in a finite set of residual capacities

$$\{r_k C \mid r_k = k/K, \ k = 1,2,...,K\}$$

where, even if $J$ is very large, $K = 100$ provides sufficient granularity. (Context should serve to distinguish the above uses of $r$ rand $r_k$ from the source parameters discussed at the outset of the Background section.) For each such capacity and its corresponding subset $J_{r_k}$ of S-VBR classes, let $e_j^m(r_k)$ denote the EB of sources in S-VBR class $j \le \ell(r_k)$, as computed according to (64) for capacity $r_k C$. Note that the computation here is restricted to the above subset ($J$ is taken to be $(r_k)$) and, hence. Case 2 assumptions apply. The remaining classes $j > \ell(r_k)$ are NS-VBR where, if treated independently. Case 1 applies. Therefore, for sources in these classes, we conservatively allocate their corresponding NEB $e_{0,j}$. Doing this for each level $k$, we thus precompute a table $E$ with $K$ rows and $J$ columns, where entry $E_{k,j}$ is the bandwidth

$$E_{k,j} = \begin{cases} e_j^m(r_k) & \text{if } j \le \ell(r_k) \\ e_{0,j} & \text{else} \end{cases} \tag{69}$$

A second precomputed table $L$, again with $K$ rows, stores the corresponding LSM class numbers, i.e.. its row-$k$ entry is

$$L_k = \ell(r_k). \tag{70}$$

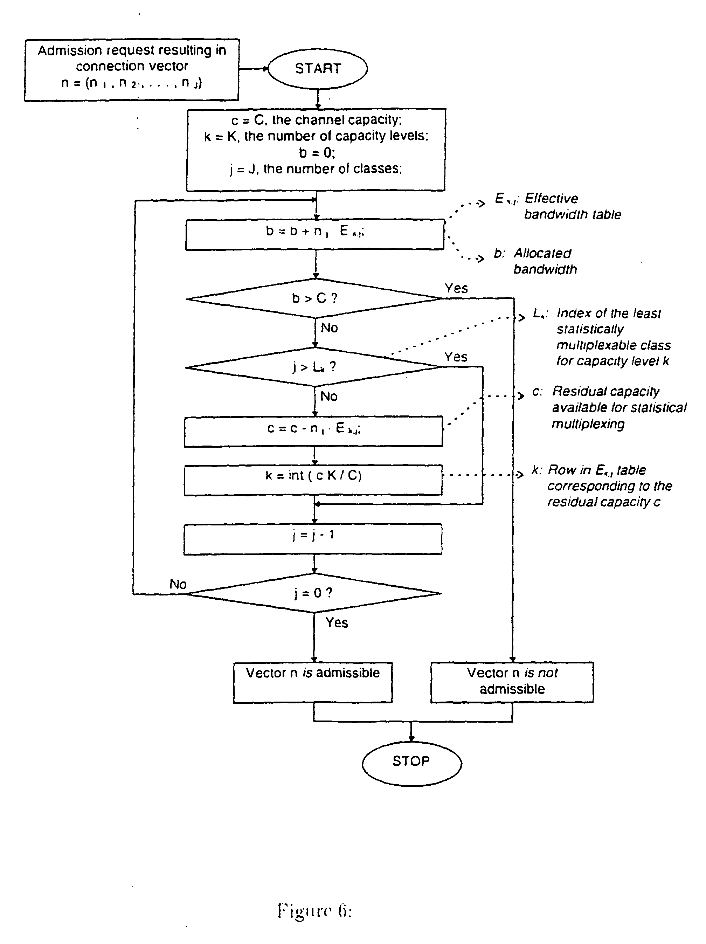

Employing $E$ and $L$ as look-up tables, the admissibility of a prospective connection vector $n = (n_1, n_2, ..., n_J)$. i.e. whether $n \in A_\gamma^m$. is then efficiently and conservatively decided by the following algorithm. Because it relies on the tables just described, we refer to it simply as the table-based (TB) algorithm. A flowchart description of the algorithm is displayed in Figure 6.

### TB Algorithm:

```
begin
    c = C                       /* c is the residual capacity that remains for further
    k = K                       /* k is the greatest integer such that r_k C ≤ c  */
    b = 0                       /* b is the total bandwidth already allocated  */
    for (j = J downto 1) begin
        b = b + n_j E_{k,j}     /* allocates bandwidth to sources in class j  */
        if (b > C) then begin   /* allocated bandwidth is greater than C  */
            vector n is not admissible
            exit
        end
        if (j > L_k) then begin /* class j is NS-VBR for capacity r_k C  */
            c = c - n_j E_{k,j} /* reduces the capacity available for further allocation
            k = ⌊cK/C⌋          /* updates k  */
        end
    end


    vector n is admissible      /* total allocated bandwidth is ≤ C */
end
```

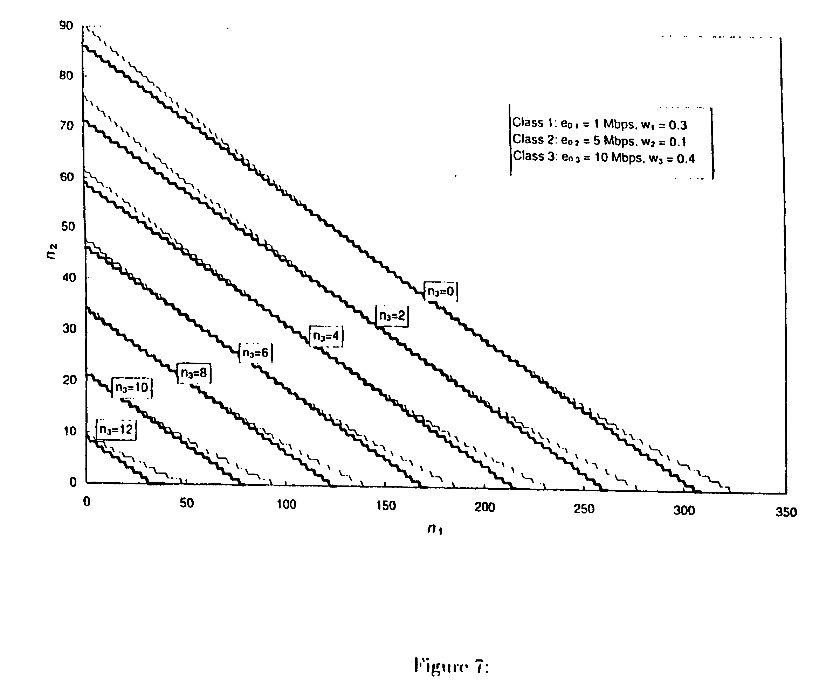

When compared to the saddlepoint (SP) algorithm [7], we find that the TB algorithm is both accurate and extremely time-efficient. Regarding first its accuracy, Figure 7 compares the resulting admissible set boundaries for an example involving three source classes. Classes 1 and 2 coincide with those considered in Figures 4 and 5. The channel capacity and QOS requirement are likewise the same. i.e.. $C$ = 150 Mbps and $\gamma$ = 20.72. As earlier, Classes 1 and 2 are therefore S-VBR. Class-3 sources are taken to have an NEB of $e_{0,3}$ = 10 Mbps, with $\omega_3$ = 0.4. Computing the corresponding value of (41), $m_j(C)$ = 14.67: hence, class 3 is NS-VBR. This is therefore an example of mixed traffic, as characterized by condition (47). For various values of $n_3$ (the number of class-3 connections), Figure 7 compares the boundaries of the admission region for classes 1 and 2, as computed by using the TB (bold curves) and the SP algorithms. Being conservative, the former permits somewhat fewer connections, particularly in instances where most of the allocation involves a single class (connection vectors near the corner points). Nevertheless, we see that the admission decisions made by this algorithm are surprisingly accurate when compared to the near-exact SP computations.

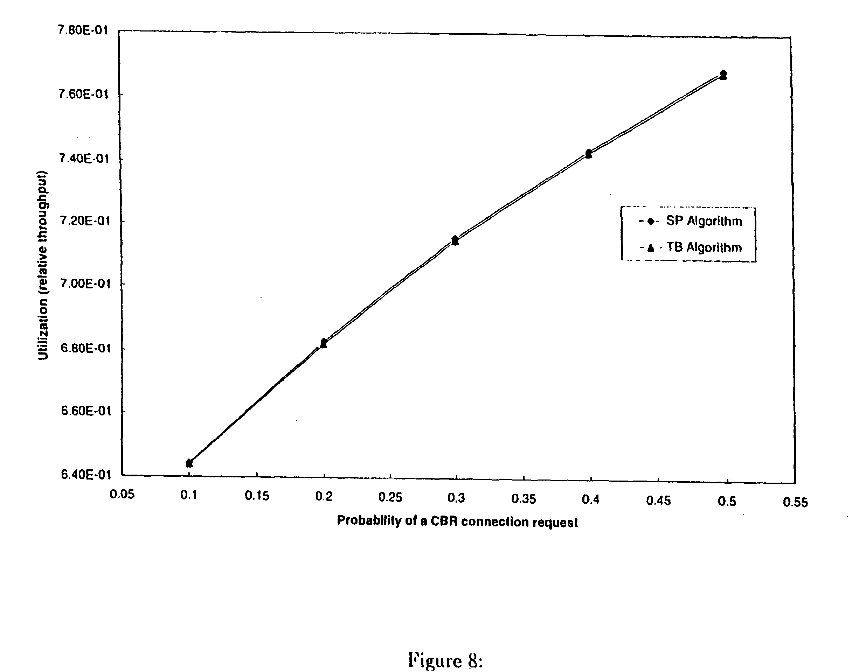

Further testimony to the effectiveness of the TB algorithm has been obtained by evaluating its performance under simulated traffic conditions. Here, the nature of a newly arrived connection request is determined by randomly selecting its traffic class from a predefined set of S-VBR and NS-VBR classes. The latter include CBR classes, where the probability of a CBR connection is adjustable via a parameter of the simulation program. In the presence of such simulated traffic and for both the TB and SP methods, we evaluated channel utilization (relative throughput), mean accepted bandwidth, and the probability that a connection is blocked (not admitted). As revealed by Figure 8, which displays channel utilization as a function of the CBR-connection probability for both algorithms, the slightly improved performance realized by lengthy SP computations is barely perceptible. Moreover, with respect to the other two measures (accepted bandwidth, blocking probability) we have likewise found that the performauce of these two algorithms is essentially identical.

However, as compared with the SP algorithm, execution of the TB algorithm is significantly faster. Indeed, together with accurate admission decisions. real-time implementation was a pivotal objective of the algorithm's developmem. By virtue of using precomputed EB tables, its time-complexity is but linear in the number of traffic classes $J$.

Specifically, the worst-case number of required operations is $2J$ floating-point products plus $2J$ floating-point sums. This permits the admission control of highly nonhomogeneous traffic (large values of $J$), a requirement that is likely for emerging broadband networks. On the other hand, methods that employ convolution or the SP approximation become infeasible if the number of traffic classes is even moderately large.

In more concrete terms. Table 2 describes the time-efficiency of the TB algorithm as compared with that of the SP algorithm.

For various durations of CPU time required by a contemporary workstation (HP Series 9000. Model 715/100, with a PA RISC 2.0 microprocessor), the table displays the maximum number of traffic classes $J$ that can be accommodated by each algorithm in that amount of time. Here we see that. even for execution times exceeding I ms. the capability of the saddlepoint method is modest compared to what the TB algorithm can handle in a fraction of a millisecond.

Table 2:

| Traffic class capability as a function of CPU time. | | |
|---|---|---|
| CPU time (ms) | Maximum value of $J$ | |
| | SP algorithm | TB algorithm |
| 0.1 | 5 | 268 |
| 0.2 | 10 | 552 |
| 0.3 | 16 | 798 |
| 0.4 | 22 | 1000 |
| 0.5 | 27 | 1204 |
| 0.6 | 33 | 1408 |
| 0.7 | 39 | 1612 |
| 0.8 | 45 | 1815 |
| 0.9 | 51 | 2015 |
| 1.0 | 56 | 2219 |
| 1.1 | 62 | 2389 |
| 1.2 | 68 | 2566 |
| 1.3 | 74 | 2718 |
| 1.4 | 80 | 2871 |

**References**

[1] A. I. Ewalid, D. Mitra, and R. H. Wentworth, "A new approach for allocating buffers and bandwidth to heterogeneous, regulated traffic in an ATM node," *IEEEJSAC*, pp. 1115-1127, August 1995.

[2] European Patent Application EP 0 756 403 A2, July 1996.

[3] F. P. Kelly, "Effective bandwidth at multi-class queues," *Queueing Systems*, pp. 5-16, September 1991.

[4] P. Billingsley, *Probability and Measure*, Wiley, NY, 1986.

[5] J. Y. Hui. "Resource allocation for broadband networks," *IEEEJSAC*, pp. 1598-1608, June 1988.

[6] J. Y. Hui. "Layered required bandwidth for heterogenous traffic." in *Proc. IN-FOCOM '92*, pp. 13-20, 1992.

[7] S. Montagna, R. Paglino, and A. Puglisi, "Call acceptance control algorithms for voice, video, and data traffic," in *Proc. of 4th Int'l Workshop on Performance Modelling and Evaluation of ATM Networks*, Ilkley, UK, July 1996.

[8] K. Schumacher and J. J. O'Reilly, "Relationship between the saddlepoint approximation and the modified Chernoff bound." *IEEE Trans. Communications*, vol. 38, no. 3, pp. 270-272, March 1990.

**Claims**

1. A method for carrying out a connectton admission control in an asynchronous network including at least a network node with presented buffer and output link capacities, said node receiving a request signal for a virtual circuit that routes vanable bit rate VBR information and where the information source may include J traffic classes either statistically multiplexable (S-VBR), or nonstatistically multiplexable (NS-VBR), said request can be granted by said node, by an algorithm which, given the resulting traffic demand in terms of existing connections plus the requested connection, as represented by a vector describing the number of connections in each of plurality of J predefined S-VBR and NS-VBR classes, decides whether said connection vector is admissible with respect to a specified upper bound on the probability of channel saturation, said method including the step of storing a look-up table in a memory for each queuing point, and **characterized in that**

   the entries Ekj of said look-up table consist of effective bandwidth value calculated using the modified Chernov bound and the look-up table has J columns and K rows;
   the J columns correspond to the said predefined traffic classes and are listed in a nonincreasing order of the extent to which a traffic class can benefit from statistical multiplexing;
   the K rows correspond to a quantization of the channel capacity C into K levels of residual capacity $C_k=(k/K)$ C, where k=1,2....K, Ck being the capacity that remains available after prior allocations of bandwidth to NS-VBR connections and;
   being Lk the largest class of said ordered traffic classes, corresponding to the S-VBR class for a certain capacity Ck, the precomputed entry Ekj of row k and column j of said look-up table is:

   - if j > Lk, the maximum bandwidth required by class-j sources, class j being in this case NS-VBR for said capacity Ck; or
   - if j ≤Lk, the effective bandwidth of class-j sources as determined relative to all the Lk classes that are S-VBR for said capacity Ck.

2. The method of claim 1, wherein based on said look-up table and beginning with a capacity relatively at the maximum level K and J traffic classes, the algorithm allocates bandwidth Ekj to any connection of the class j in said connection vector and compares an unaccumulated total bandwidth allocation value b with C:

   - if b>C, then said connection vector is not admissible;
   - if j>1 and class j is S-VBR for the capacity Ck, where j<Lk, then the above allocation procedure is repeated for the connections of the class j-1;
   - if j>1, then k is reduced to a value k', when Ck' is the residual capacity that remains after allocations to connections of the class j, and the above routine is repeated for connections of the class j-1;
   - If j=1 and said connection vector is admissible.

3. The method of claim 1, wherein each request signal from a certain traffic source has a set of leaky-bucket characterization parameters comprising a token rate parameter r regulating the average input rate, a token buffer capacity parameter $B_r$ defining the burst size and a peak rate parameter P defining the maximum peak rate of the source, the statistical multiplexability of a request coming from a source classified as belonging to a certain class of traffic being decreased in value by a factor corresponding to said parameter r, whereby a class nominally statistically multiplexable at a certain available bandwidth capacity of the link may result non-multiplexable because of said decrement of statistical multiplexability, and further **characterized in that** among requests classified as statistically multiplexable, a least-statistically-multiplexable request is identified as the one of highest class number that remains multiplexable after accounting for said decrement.

4. The method of claim 1, wherein for a set of traffic classes, all statistically multiplexable, the method comprises the compotation of a linear upper bound or hyperplane for the admissible set determined by the so-called modified Chernov bound, MCB, algorithm.

5. The method of claim 3, wherein the corner points of the MCB-determined admissible set are first determined algorithmically and then a linear outer bound is identified with the said hyperplane having the same comer points.

6. The method of claim 3, wherein a linear lower bound or hyperplane for the MCB-determined admissible set tangent to a point on the boundary of said set is constructed.

7. The method of claim 5 whereby the tangent point is selected along a line that runs between the midpoint of the said outer bound and the original corresponding to the point where no sources are allocated; said tangent point being the pointy where this line intersects the MCB-determined admissible set and the construction of said linear lower bound or hyperplane is based on partial derivatives associated with the MCB.

8. The method of claim 5, wherein effective bandwidths relative to a linear approximation of an admissible set of the traffic classes relative to the linear lower bound are computed.

**Patentansprüche**

1. Verfahren zur Ausführung einer Verbindungszulassungssteuerung in einem asynchronen Netz, das wenigstens einen Netzknoten mit vorgeschriebenen Puffer- und Ausgangsübertragungsstrecken-Kapazitäten umfasst, wobei der besagte Knoten ein Anforderungssignal für eine virtuelle Verbindung empfängt, welche der Übertragung von Informationen mit variabler Bitrate (VBR) dient, und wobei die Informationsquelle $J$ Verkehrsklassen beinhalten kann, die entweder statistisch multiplexfähig (S-VBR) oder nichtstatistisch multiplexfähig (NS-VBR) sind, wobei die besagte Anforderung von dem besagten Knoten mittels eines Algorithmus angenommen werden kann, welcher in Anbetracht des resultierenden Verkehrsaufkommens, ausgedrückt über die bestehenden Verbindungen plus die angeforderte Verbindung, was durch einen Vektor dargestellt wird, der die Anzahl der Verbindungen in jeder Klasse aus einer Vielzahl von J vordefinierten S-VBR und NS-VBR Klassen beschreibt, entscheidet, ob der besagte Verbindungsvektor zulässig ist bezüglich einer festgelegten oberen Schranke für die Wahrscheinlichkeit der Kanalsättigung, wobei das besagte Verfahren den Schritt des Speicherns einer Nachschlagetabelle in einem Speicher für jeden Warteschlangenpunkt umfasst und **dadurch gekennzeichnet ist, dass**

die Einträge Ekj der besagten Nachschlagetabelle aus einem Wert der effektiven Bandbreite bestehen, der unter Verwendung der modifizierten Chernov-Schranke berechnet wurde, und die Nachschlagetabelle J Spalten und K Zeilen aufweist;
die J Spalten den besagten vordefinierten Verkehrsklassen entsprechen und in einer nichtwachsenden Reihenfolge nach dem Grad, in dem eine Verkehrsklasse von statistischem Multiplexing profitieren kann, aufgelistet sind;
die K Zeilen einer Quantisierung der Kanalkapazität C in K Niveaus von Restkapazität Ck=(k/K)C entsprechen, wobei k=1,2,...,K und wobei Ck die Kapazität ist, die nach vorherigen Zuweisungen von Bandbreite zu NS-VBR Verbindungen verfügbar bleibt; und
wenn Lk die größte Klasse von besagten geordneten Verkehrsklassen ist, welche der S-VBR Klasse für eine gewisse Kapazität Ck entspricht, der im Voraus berechnete Eintrag Ekj von Zeile k und Spalte j der besagten Nachschlagetabelle ist:

- falls j > Lk ist, die maximale Bandbreite, die von Quellen der Klasse j benötigt wird, wobei die Klasse j in diesem Falle NS-VBR für die besagte Kapazität Ck ist; oder
- falls j ≤ Lk ist, die effektive Bandbreite von Quellen der Klasse j, die bezüglich aller Klassen Lk bestimmt worden ist, welche S-VBR für die besagte Kapazität Ck sind.

2. Verfahren nach Anspruch 1, wobei auf der Basis der besagten Nachschlagetabelle und beginnend bei einer Kapazität, welche dem maximalen Pegel K und J Verkehrsklassen entspricht, der Algorithmus jeder Verbindung der Klasse j in dem besagten Verbindungsvektor Bandbreite Ekj zuweist und einen nichtakkumulierten Gesamtwert der Bandbreitenzuweisung b mit C vergleicht;

- falls b> C ist, ist der besagte Verbindungsvektor nicht zulässig;
- falls j > 1 ist und die Klasse j S-VBR ist für die Kapazität Ck, wobei j < Lk ist, so wird die obige Zuweisungsprozedur für die Verbindungen der Klasse j-1 wiederholt;
- falls j > 1 ist, wird k auf einen Wert k' verringert, wobei Ck' die Restkapazität ist, welche nach Zuweisungen zu Verbindungen der Klasse j verbleibt, und die obige Routine wird für die Verbindungen der Klasse j-1 wiederholt;
- falls j = 1 ist, und der besagte Verbindungsvektor ist zulässig.

3. Verfahren nach Anspruch 1, wobei jedes Anforderungssignal von einer gewissen Verkehrsquelle eine Menge von Parametern zur Charakterisierung eines Leaky Bucket aufweist, welche einen Tokenrate-Parameter r, der die mittlere Eingangsrate regelt, einen Parameter der Tokenpuffer-Kapazität $B_T$, der die Burst-Größe definiert, und einen Spitzenraten-Parameter P, der die maximale Spitzenrate der Quelle definiert, umfasst, wobei die statistische Multiplexfähigkeit einer Anforderung, die von einer als zu einer bestimmten Verkehrsklasse gehörend klassifizierten Quelle stammt, wertmäßig um einen Faktor verringert wird, der dem besagten Parameter r entspricht, wodurch eine Klasse, die bei einer bestimmten verfügbaren Bandbreitenkapazität der Übertragungsstrecke nominal statistisch multiplexfähig ist, sich aufgrund der besagten Verringerung der statistischen Multiplexfähigkeit als nicht multiplexfähig erweisen kann, und ferner **dadurch gekennzeichnet, dass** unter den als statistisch multiplexfähig klassifizierten Anforderungen eine kleinste statistisch multiplexfähige Anforderung angegeben wird, als diejenige mit der höchsten Klassennummer, die nach Berücksichtigung der besagten Verringerung multiplexfähig bleibt.

4. Verfahren nach Anspruch 1, wobei für eine Menge von Verkehrsklassen, die alle statistisch multiplexfähig sind, das Verfahren die Berechnung einer linearen oberen Schranke oder Hyperebene für die zulässige Menge umfasst, die durch den so genannten Algorithmus der modifizierten Chernov-Schranke (MCB) bestimmt wird.

5. Verfahren nach Anspruch 3, wobei zuerst die Eckpunkte der MCB-bestimmten zulässigen Menge algorithmisch bestimmt werden und anschließend eine lineare äußere Schranke mit der besagten Hyperebene angegeben wird, welche dieselben Eckpunkte hat.

6. Verfahren nach Anspruch 3, wobei eine lineare untere Schranke oder Hyperebene für die MCB-bestimmte zulässige Menge, die zu einem Punkt auf dem Rand der besagten Menge tangential ist, konstruiert wird.

7. Verfahren nach Anspruch 5, wobei der Tangentialpunkt auf einer Linie gewählt wird, welche zwischen dem Mittelpunkt der besagten äußeren Schranke und dem Ursprung, der dem Punkt entspricht, wo keine Quellen zugewiesen werden, verläuft; wobei der besagte Tangentialpunkt der Punkt ist, wo diese Linie die MCB-bestimmte zulässige Menge schneidet, und wobei die Konstruktion der besagten linearen unteren Schranke oder Hyperebene auf partiellen Ableitungen beruht, die mit der MCB verknüpft sind.

8. Verfahren nach Anspruch 5, wobei effektive Bandbreiten bezüglich einer linearen Approximation einer zulässigen Menge den Verkehrsklassen bezüglich der linearen unteren Schranke berechnet werden.

**Revendications**

1. Procédé d'exécution d'un contrôle d'admission de connexion dans un réseau asynchrone comprenant au moins un noeud de réseau ayant des capacités prescrites de tampon et de liaison de sortie, ledit noeud recevant un signal de demande de circuit virtuel qui achemine des informations à débit binaire variable (VBR) et en sachant que la source des informations peut comprendre $J$ classes de trafic soit aptes à un multiplexage statistique (S-VBR), soit inaptes à un multiplexage statistique (NS-VBR), que ladite demande peut être acceptée par ledit noeud, par un algorithme qui, étant donné la demande de trafic résultante en fonction des connexions existantes plus la connexion demandée, telle que représentée par un vecteur décrivant le nombre de connexions dans chacune d'une pluralité de $J$ classes S-VBR et NS-VBR prédéfinies, décide si ledit vecteur de connexion est admissible quant à une borne supérieure spécifiée sur la probabilité de saturation du canal, ledit procédé comprenant l'étape de stockage d'une table de consultation dans une mémoire pour chaque point de file d'attente, et **caractérisé en ce que** :

les entrées $E_{k,j}$ de ladite table de consultation consistent en valeurs de largeur de bande effective calculées en utilisant la borne de Chernov modifiée et la table de consultation comporte $J$ colonnes et $K$ rangées ;
les $J$ colonnes correspondent auxdites classes de trafic prédéfinies et sont listées dans un ordre non croissant de la mesure dans laquelle une classe de trafic peut tirer avantage du multiplexage statistique ;
les $K$ rangées correspondent à une quantification de la capacité $C$ du canal en $K$ niveaux de capacité résiduelle $C_k = (k/K)C$, où $k = 1,2,...,K$, $C_k$ étant la capacité qui reste disponible après des allocations antérieures de largeur de bande à des connexions NS-VBR, et
$L_k$ étant la plus grande classe desdites classes de trafic ordonnancées, correspondant à la classe S-VBR pour une certaine capacité $C_k$, l'entrée précalculée $E_{k,j}$ de la rangée $k$ et de la colonne $j$ de ladite table de consultation est :

- si $j > L_k$, la largeur de bande maximale requise par des sources de classe $j$, la classe $j$ étant dans ce cas NS-VBR pour ladite capacité $C_k$, ou
- si $j \leq L_k$, la largeur de bande effective des sources de classe $j$ comme déterminée relativement à toutes les classes $L_k$ qui sont S-VBR pour ladite capacité $C_k$.

2. Procédé selon la revendication 1, dans lequel sur la base de ladite table de consultation et en commençant par une capacité relativement aux classes de trafic $K$ et $J$ de niveau maximal, l'algorithme alloue la largeur de bande $E_{k,j}$ à une quelconque connexion de la classe $j$ dudit vecteur de connexion et compare une valeur $b$ non accumulée d'allocation de largeur de bande totale avec $C$ :

- si $b > C$, ledit vecteur de connexion n'est pas admissible ;
- si $j > 1$ et que la classe $j$ est S-VBR pour la capacité $C_k$, en sachant que $j < L_k$, la procédure d'allocation ci-dessus est répétée pour les connexions de la classe $j$-1 ;
- si $j > 1$, $k$ est réduit à une valeur $k'$, $C_{k'}$ étant la capacité résiduelle qui reste après les allocations aux connexions de la classe $j$, et le sous-programme ci-dessus est répétée pour les connexions de la classe $j$-1 ;
- si $j = 1$, ledit vecteur de connexion est admissible.

3. Procédé selon la revendication 1, dans lequel chaque signal de demande provenant d'une certaine source de trafic a une série de paramètres de caractérisation de dispositif à fuite comprenant un paramètre de débit de jetons $r$ régulant le débit moyen d'entrée, un paramètre de capacité de tampon de jetons $B_T$ définissant la taille des salves et un paramètre de débit de pointe $P$ définissant le débit de pointe maximal de la source, l'aptitude au multiplexage statistique d'une demande provenant d'une source classée comme appartenant à une certaine classe de trafic étant diminuée en valeur d'un facteur correspondant audit paramètre $r$, ce par quoi une classe nominalement apte à un multiplexage statistique à une certaine capacité de largeur de bande disponible de la liaison peut s'avérer non multiplexable à cause dudit décrément d'aptitude au multiplexage statistique, et **caractérisé par** ailleurs en ce que parmi les demandes classées comme aptes à un multiplexage statistique, une demande le moins apte à un multiplexage statistique est identifiée comme celle de numéro de classe le plus élevé qui reste multiplexable après prise en compte dudit décrément.

4. Procédé selon la revendication 1, dans lequel pour un ensemble de classes de trafic, toutes aptes à un multiplexage statistique, le procédé comprend le calcul d'une borne supérieure linéaire ou hyperplan pour l'ensemble admissible déterminé par l'algorithme dit à borne de Chemov modifiée (MCB).

5. Procédé selon la revendication 3, dans lequel les points d'angle de l'ensemble admissible déterminé par MCB sont d'abord déterminés par algorithme et ensuite, une borne extérieure linéaire est identifiée audit hyperplan ayant les mêmes points d'angle.

6. Procédé selon la revendication 3, dans lequel on construit pour l'ensemble admissible déterminé par MCB une borne inférieure linéaire ou hyperplan tangente à un point sur la frontière dudit ensemble.

7. Procédé selon la revendication 5, par lequel le point tangent est sélectionné sur une ligne qui court entre le point central de ladite borne extérieure et l'origine correspondant au point où aucune source n'est allouée, ledit point tangent étant le point où cette ligne coupe l'ensemble admissible déterminé par MCB et la construction de ladite borne inférieure linéaire ou hyperplan est basée sur des dérivées partielles associées à la MCB.

8. Procédé selon la revendication 5, dans lequel on calcule des largeurs de bande effectives relativement à une approximation linéaire d'un ensemble admissible des classes de trafic relativement à la borne inférieure linéaire.

Figure 1:

Figure 2:

Figure 3:

Figure 4:

Figure 5:

Figure 6:

Figure 7:

Figure 8: